# EUROPÄISCHE PATENTSCHRIFT

(11) **EP 2 239 121 B1**
(45) Veröffentlichungstag und Bekanntmachung des Hinweises auf die Patenterteilung: **04.06.2014**
(21) Anmeldenummer: 10001116.2
(22) Anmeldetag: 03.02.2010
(51) Int. Cl.: B28C 5/42, B60P 3/16, B60R 11/06

(54) **Fahrmischer**
Truck mixer
Bétonnière

(30) Priorität: 06.04.2009 DE 202009004729 U
(43) Veröffentlichungstag der Anmeldung: 13.10.2010
(73) Patentinhaber: Liebherr-Mischtechnik GmbH, 88427 Bad Schussenried (DE)
(72) Erfinder: Müller, Thomas, 88525 Dürmentingen (DE); Wittig, Martin, 88400 Biberach (DE)
(74) Vertreter: Laufhütte, Dieter

(56) Entgegenhaltungen:
- EP-A1- 0 079 415
- DE-A1- 3 107 196
- DE-A1- 19 644 180
- GB-A- 400 342
- US-A- 2 488 292
- US-A- 3 580 440

## Beschreibung

Die Erfindung betrifft einen Fahrmischer mit mindestens einer Verlängerungsschurre, die zum Transport auf einer Halterungseinrichtung gesichert aufnehmbar ist.

Fahrmischer weisen im hinteren offenen Bereich ihrer Mischtrommel einen Auslauftrichter auf, unterhalb dessen eine sogenannte Schwenkschurre angeordnet ist. Hier handelt es sich um eine Schurre, die am Fahrmischer schwenkbar im Bereich des Fahrzeugshecks befestigt ist. Zur Verlängerung dieser unterhalb des Auslauftrichters angeordneten Schwenkschurre dienen eine oder mehrere Verlängerungsschurren. Beim Entladevorgang des Trommelinhaltes des Fahrmischers wird die Verlängerungsschurre in das Ende der Schwenkschurre eingehängt. Die Verlängerungsschurre kann aus mehreren Teilen bestehen, die während des Transports üblicherweise auf den hinteren Kotflügeln des Fahrmischers befestigt sind. Die Verlängerungsschurren sind auf den hinteren Kotflügeln auf entsprechend vorgesehenen Schurrenauflagen gehalten. Bei den Schurrenauflagen handelt es sich um auf den hinteren Kotflügeln des Fahrmischers fest angeordnete Blechstreifen, die teilweise an die Außenform der Verlängerungsschurre angepaßt sind, so dass nach entsprechender Sicherung durch einen sogenannten Schurrenhalter die Verlängerungsschurren fest auf ihrer Position auf den hinteren Kotflügeln gehalten werden.

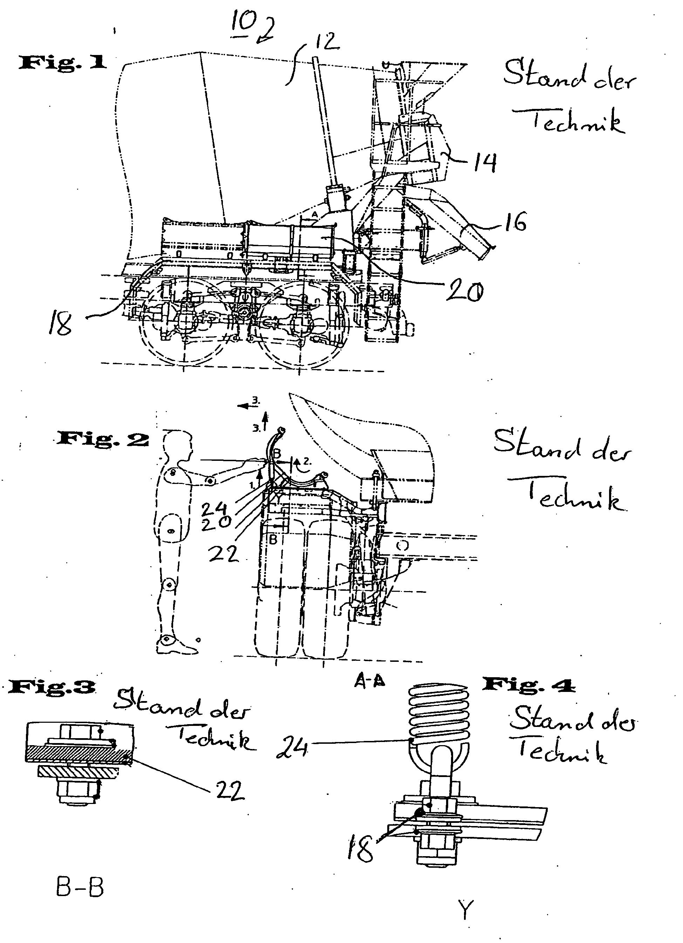

Diese Halterungssituation ist in den Figuren 1 bis 4 der beigefügten Zeichnungen dargestellt. Der hier nur teilweise dargestellte Fahrmischer 10 weist eine übliche Mischtrommel 12 auf. Im hinteren Bereich des Fahrgestells des Fahrmischers ist der Auslauftrichter 14 angeordnet, unterhalb dessen die Schwenkschurre 16 schwenkbar angeordnet ist. Auf hinteren Kotflügeln 18 sind Verlängerungsschurren 20 auf zwei aus gebogenen Blechen bestehenden Schurrenauflagen 22 gelagert, wobei die Verlängerungsschurren 20 mittels eines Schurrenhalters 24 in der Position gehalten werden. Der Schurrenhalter 24 weist eine Zugfeder (vgl. Figur 4) auf, die über ihre Federkraft die Verlängerungsschurre 20 auf den Schurrenauflagen festhält. Die Schurrenauflagen 22 sind, wie in Figur 3 dargestellt, über Schraubverbindungen mit dem Kotflügel 18 verbunden.

Zur Entnahme einer Verlängerungsschurre 20 muß nun eine Reihe von Arbeitsschritten erfolgen:
1. Zunächst muß der Haken des Schurrenhalters 24 entgegen der Zugfeder angehoben und zur Seite hin abgelegt werden.
2. Anschließend muß die Verlängerungsschurre 20 zum Herausnehmen aus den Schurrenauflagen 22 herausgenommen und entgegen den Anschlag der Schurrenauflage in der Schurrenauflage 22 gedreht werden.
3. Danach muß die Verlängerungsschurre von dem Bedienpersonal durch eine vertikale Bewegung nach oben aus der Schurrenauflage 22 herausgenommen werden.
4. Zum Ablegen der Verlängerungsschurre 20 müssen diese Arbeitsschritte in umgekehrter Reihenfolge durchlaufen werden.

Diese Handhabung der Verlängerungsschurre ist sehr umständlich. Hierbei ist zu berücksichtigen, dass die Montagehöhe der Schurrenauflage abhängig von der Fahrzeughöhe und der Kotflügelbefestigung ist. Das bedeutet, dass sich die Schurrenauflage in einer Höhe von 1,30 m bis 1,60 m befindet. Zur Lagerung der Schurre auf dem Kotflügel muß der Bediener die bis zu 20 kg schwere Verlängerungsschurre in eine Höhe von 1,50 m bis 1,80 m anheben, damit er die Verlängerungsschurre in die Verlängerungsschurrenhalterung einlegen kann. Nun können an einem Fahrmischer bis zu vier Verlängerungsschurren an den Kotflügeln gelagert sein. Für vergleichsweise kleine oder schwächere Bedienpersonen bedeutet dies eine erhebliche Kraftanstrengung.

Durch die offene Bauweise der Verlängerungsschurrenhalterung auf dem Kotflügel des Fahrmischers ist ein hoher Reinigungsaufwand notwendig. Darüber hinaus ist die offene Bauweise der Schurrenauflage und Schurrenhalterung auf dem Kotflügel auch optisch nicht ansprechend.

GB 400 342 A offenbart einen Fahrmischer mit mindestens einer Verlängerungsschurre, die zum Transport auf einer Halterungseinrichtung gesichert aufgenommen wird. Die Halterungseinrichtung ist rotatorisch zwischen einer Transportstellung und einer Entnahmestellung verschwenkbar. Diese Handhabung der Verlängerungsschurre ist, wie in den oben beschriebenen bisher bekannten Fahrmischer, sehr umständlich. Des Weiteren ist die Bedienung durch die Bedienperson wesentlich erschwert.

US 3 580 440 A offenbart einen gattungsgemäßen Fahrmischer mit mindestens einer Verlängerungsschurre, die zum Transport auf einer Halterungseinrichtung gesichert aufnehmbar ist. Die Schurre ist mittels Befestigungselementen, die an die Form der Schurre angepasst sind, auf die Halterungseinrichtung befestigt. Diese bekannte Halterungseinrichtung ist derart aufgebaut, dass sie drei zusätzliche Befestigungselemente aufweist, durch welche die Schurre befestigt werden kann.

Aufgabe der vorliegenden Erfindung ist es daher eine einfachere Entnahme der Verlängerungsschurren aus ihrer Transportposition und eine einfachere Sicherung der Verlängerungsschurren in der Transportposition zu ermöglichen.

Erfindungsgemäß wird diese Aufgabe durch einen Fahrmischer mit den Merkmalen des Anspruchs 1 gelöst.

Demnach wird bei einem gattungsgemäßen Fahrmischer mit den Merkmalen des kennzeichnenden Teils des Anspruchs 1 mindestens eine Halterungseinrichtung für die Verlängerungsschurren vorgesehen, die rotatorisch und translatorisch zwischen einer Transportstellung und einer Entnahmestellung führbar und verfahbar ist, wobei die mindestens eine Halterungseinrichtung aus einem U-förmig geformtes Blechteil besteht, das die Form der jeweiligen mindestens einen aufzunehmenden Verlängerungsschrure folgt. Hierdurch wird es ermöglicht, die Verlängerungsschurre aus der Transportstellung über die rotatorisch und translatorisch verfahrbare Halterungseinrichtung in eine erniedrigte und damit bequeme Entnahmeposition zu verfahren. Dadurch ist es möglich, die Verlängerungsschurre aus einer ergonomischen Höhe zu entnehmen.

Bevorzugte Ausgestaltungen der Erfindung ergeben sich aus der sich an den Hauptanspruch anschließenden Fassung der Unteransprüche.

Demnach wird die mindestens eine Halterungseinrichtung in einer Führung geführt.

Vorteilhaft kann die Halterungseinrichtung auf einem hinteren Kotflügel des Fahrmischers angeordnet sein.

Besonders vorteilhaft ist die Halterungseinrichtung elektrisch, pneumatisch oder hydraulisch verfahr- und/oder verschwenkbar. Selbstverständlich kann die Halterungseinrichtung aber auch durch Muskelkraft bewegt werden.

Gemäß einer weiteren vorteilhaften Ausgestaltung hat jede der beabstandet voneinander angeordneten Halterungseinrichtungen jeweils eine Verlängerungsschurre. Die Zahl der Halterungseinrichtungen hängt hier von der Länge der jeweiligen Verlängerungsschurre ab.

Insbesondere unter optischen Gesichtspunkten aber auch bezüglich der Reinigungsmöglichkeit ist es von Vorteil, wenn die Halterungseinrichtungen jeweils aus einem Profil bestehen, das an die Form der aufzunehmenden Verlängerungsschurre angepaßt ist.

Weiterhin können die Halterungseinrichtungen die eingelegte Verlängerungsschurre auf einer Seite über einen hakenförmigen Vorsprung übergreifen, während die gegenüberliegende Seite mittels eines manuell lösbaren Rastmechanismus gesichert ist.

Weitere Merkmale, Einzelheiten und Vorteile der Erfindung werden anhand eines in der Zeichnung dargestellten Ausführungsbeispiels näher erläutert. Es zeigen:
- Figuren 1 bis 4:: Darstellungen eines Fahrmischers mit Verlängerungsschurre nach dem Stand der Technik und
- Figuren 5 bis 8:: Detaildarstellungen eines Teils eines Fahrmischers mit einer erfindungsgemäßen Schurrenhalterung gemäß einem ersten Ausführungsbeispiel der vorliegenden Erfindung.

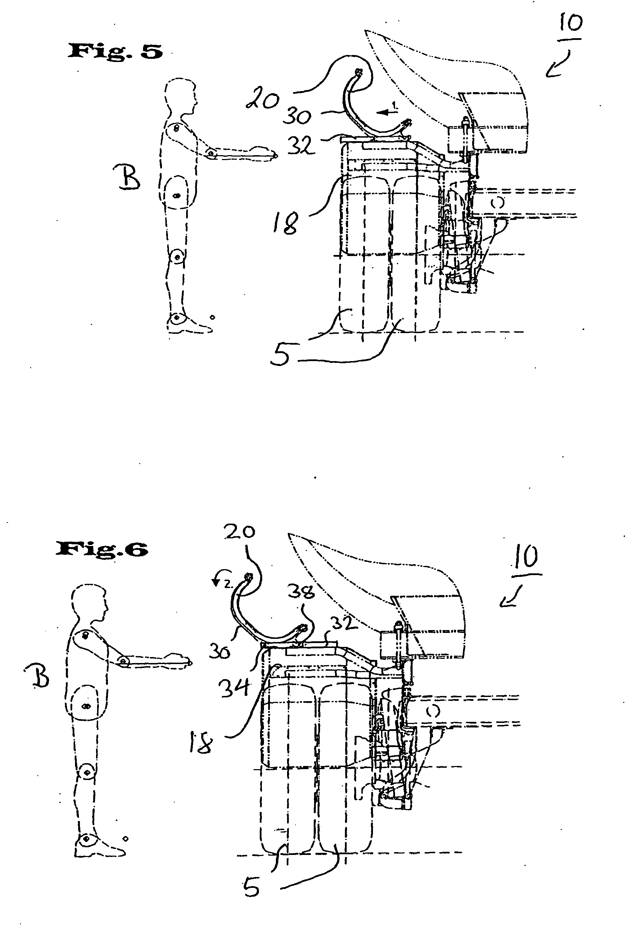

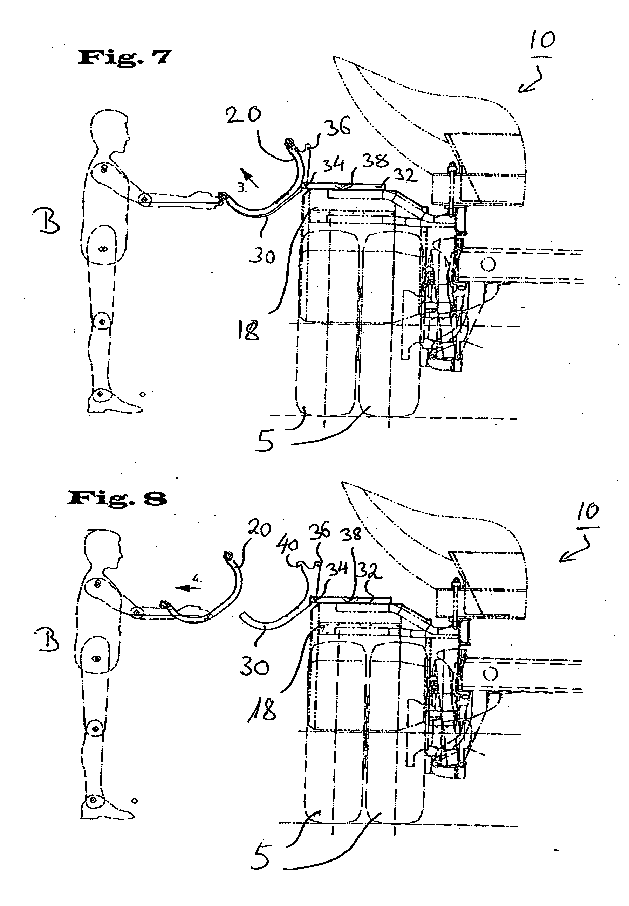

In den Figuren 5 bis 8 ist jeweils ein Detail eines Fahrmischers 10 dargestellt. Es ist jeweils der linke Heckbereich mit dem die Heckräder 5 überdeckenden Kotflügel 18 gezeigt. Auf dem Kotflügel 18 ist eine Verlängerungsschurre 20 angeordnet. Wie in Figur 5 dargestellt, ist die Verlängerungsschurre 20 in Halterungseinrichtungen 30 gehalten, von denen mehrere über die Länge der Verlängerungsschurre 20 verteilt auf dem Kotflügel 18 angeordnet sind. Der Aufbau der Halterungseinrichtung 30 ergibt sich insbesondere aus der Figur 8, in der die Verlängerungsschurre 20 bereits entnommen ist. Wie dieser Figur zu entnehmen ist, handelt es sich im wesentlichen um ein U-förmig geformtes Blechteil. Dieses ist in einer Führung 32 derart geführt, dass es translatorisch und/oder rotatorisch zwischen einer Transportstellung (vgl. Figur 5) und einer Entnahmestellung (vgl. Figur 8) bewegbar und verschwenkbar ist.

Hierzu weist die Halterungseinrichtung 30 einen in der Führung 32 führbaren Schwenkbolzen 34 auf. Weiterhin sind an der Halterungseinrichtung zusätzliche Bolzen 36 vorgesehen, die in einer in der Führung verschieblich angeordneten Bolzenaufnahme 38 lösbar aufnehmbar sind. Diese lösbare Aufnahme dient dazu, dass die Halterungseinrichtung 30 zunächst über einen bestimmten Bereich in der Führung 32 translatorisch verfahren werden kann (vgl. Figur 5 und 6). Nach Erreichen einer Endstellung am Rande der Führung 32 (vgl. Figur 6) gibt dann die Aufnahme 38 die entsprechenden Bolzen 36 frei, so dass die Halterungseinrichtung 30 um die Schwenkbolzen 34 verschwenkt werden kann (vgl. Figur 7).

Die Bolzenaufnahme 38 kann dabei in beliebiger Art und Weise ausgebildet sein. Es ist nur wesentlich, dass sie die Bolzen 36 während der translatorischen Bewegung in der Führung 32 sicher festhalten und diese erst nach Erreichen der Endposition gemäß Figur 6 freigeben, so dass ein Verschwenken der Halterungseinrichtung 20 um die Schwenkzapfen 34 möglich ist. Zum anderen muß beim umgekehrten Einschwenken der Halterungseinrichtung 30 jeweils der Schwenkzapfen 36 von der Halterung 38 wieder sicher aufgenommen werden können, so dass diese in der Führung verfahren werden kann.

Anhand der Abfolge der Darstellungen gemäß der Figuren 5 bis 8 kann die Entnahme einer Verlängerungsschurre durch eine Bedienperson B erläutert werden. In Figur 5 ist die Verlängerungsschurre in ihrer Transportposition dargestellt. Sie kann von der Bedienperson B in Pfeilrichtung 1. translatorisch verschoben werden, bis die Position gemäß Figur 6 erreicht ist. In dieser Position wird die Verlängerungsschurre 20 in Pfeilrichtung 2. um die Schwenkbolzen 34 verschwenkt, wobei die Bolzen 36 aus der Halterung 38 freigegeben werden.

In Figur 7 ist die Halterungseinrichtung 30 zusammen mit der Verlängerungsschurre 20 bereits verschwenkt. Aus dieser herabgeschwenkten Position kann die Verlängerungsschurre 20 von der Bedienperson B in Pfeilrichtung 3. entnommen werden.

In Figur 8 ist die entnommene Verlängerungsschurre 20, die in Pfeilrichtung 4. aus den Halterungseinrichtungen 30 herausgenommen wurde, dargestellt.

Wie sich aus der Abfolge der Figuren 5 bis 8 zeigt, kann die Bedienperson B die Verlängerungsschurre 20 wesentlich leichter aus der Transportstellung entnehmen, da diese mit der Halterungseinrichtung 30 zusammen in eine der Bedienperson B zugewandte Position verfahr ist, wobei diese Entnahmeposition zusätzlich noch gegenüber der Höhe des Kotflügels 18 des Fahrmischers abgesenkt ist.

Zur Aufnahme der Verlängeurngsschurre 20 in den Halterungseinrichtungen 30 weisen diese auf der einen Seite einen hakenförmigen Vorsprung 40 auf, während auf der gegenüberliegenden Seite ein hier nicht näher dargestellter Verriegelungsmechanismus zur Sicherung der Verlängerungsschurre in der Halterungseinrichtung 30 vorgesehen ist.

## Patentansprüche

1. Fahrmischer (10) mit mindestens einer Verlängerungsschurre (20), die zum Transport auf mindestens einer Halterungseinrichtung (30) gesichert aufnehmbar ist,
**dadurch gekennzeichnet, dass** die mindestens eine Halterungseinrichtung (30) translatorisch zwischen einer Transportstellung und einer Entnahmestellung in einer Führung (32) führbar und verfahrbar ist, und rotatorisch verschwenkbar ist, wobei die mindestens eine Halterungseinrichtung (30) ein U-förmig geformtes Blechteil ist, das die Form der jeweiligen mindestens einen aufzunehmenden Verlängerungsschurre (20) folgt.

2. Fahrmischer nach Anspruch 1, **dadurch gekennzeichnet, dass** die mindestens eine Halterungseinrichtung (30) einen in der Führung (32) führbaren Schwenkbolzen (34) sowie weitere Bolzen (36) aufweist, wobei die Bolzen (36) in einer in der Führung (32) verschieblich angeordneten Bolzenaufnahme (38) lösbar aufnehmbar sind, so dass nach Erreichen einer Endstellung am Rande der Führung (32) die mindestens eine Halterungsvorrichtung um den Schwenkbolzen (34) verschwenkbar ist.

3. Fahrmischer nach einem der Ansprüche 1 oder 2, **dadurch gekennzeichnet, dass** die Halterungseinrichtung (30) auf einem hinteren Kotflügel (18) des Fahrmischers (10) angeordnet ist.

4. Fahrmischer nach einem der vorhergehenden Ansprüche, **dadurch gekennzeichnet, dass** die mindestens eine Halterungseinrichtung (30) elektrisch, pneumatisch oder hydraulisch verfahrbar und verschwenkbar ist.

5. Fahrmischer nach einem der vorhergehenden Ansprüche, **dadurch gekennzeichnet, dass** mehrere Halterungseinrichtungen (30) jeweils eine Verlängerungsschurre (20) halten.

6. Fahrmischer nach einem der vorhergehenden Ansprüche, **dadurch gekennzeichnet, dass** die mindestens eine Halterungseinrichtung (30) die jeweilige eingelegte Verlängerungsschurre (20) auf einer Seite über einen hakenförmigen Vorsprung (40) übergreift, während die gegenüberliegende Seite mittels eines manuell lösbaren Rastmechanismus gesichert ist.

## Claims

1. A truck mixer (10) with at least one extension chute (20) which for transport can be received on at least one holding means (30) in a locked manner,
**characterized in that** the at least one holding means (30) is translatorily guidable and movable in a guideway (32) between a transport position and a removal position, and rotatorily pivotable, wherein the at least one holding means (30) is a U-shaped sheet-metal part which follows the shape of the respective at least one extension chute (20) to be received.

2. The truck mixer according to claim 1, **characterized in that** the at least one holding means (30) includes a swivel bolt (34) guidable in the guideway (32) as well as further bolts (36), wherein the bolts (36) can releasably be received in a bolt receptacle (38) shiftably arranged in the guideway (32), so that after reaching an end position at the edge of the guideway (32) the at least one holding means is pivotable about the swivel bolt (34).

3. The truck mixer according to any of claims 1 or 2, **characterized in that** the holding means (30) is arranged on a rear fender (18) of the truck mixer (10).

4. The truck mixer according to any of the preceding claims, **characterized in that** the at least one holding means (30) can be moved and swivelled electrically, pneumatically or hydraulically.

5. The truck mixer according to any of the preceding claims, **characterized in that** several holding means (30) each hold an extension chute (20).

6. The truck mixer according to any of the preceding claims, **characterized in that** the at least one holding means (30) on one side engages over the respective inserted extension chute (20) by means of a hook-shaped protrusion (40), whereas the opposite side is locked by means of a manually releasable latching mechanism.

## Revendications

1. Bétonnière portée (10) comportant au moins une goulotte de rallonge (20) qui, pour le transport, peut être logée de manière sécurisée sur au moins un dispositif de fixation (30),
**caractérisée en ce que** ledit au moins un dispositif de fixation (30) peut être guidé et déplacé en translation dans un guide (32) entre une position de transport et une position d'enlèvement, et est apte à effectuer un pivotement rotatif, ledit au moins un dispositif de fixation (30) étant une pièce en tôle en forme de U, qui épouse la forme de ladite au moins une goulotte de rallonge (20) à recevoir dans chaque cas.

2. Bétonnière portée selon la revendication 1, **caractérisée en ce que** ledit au moins un dispositif de fixation (30) comporte des axes de pivotement (34) aptes à être guidés dans le guide (32), ainsi que d'autres axes (36), lesdits axes (36) pouvant être reçus de manière amovible dans un logement (38), agencé de manière mobile dans le guide (32), de telle sorte que ledit au moins un dispositif de fixation, après avoir atteint une position finale sur le bord du guide (32), peut pivoter autour de l'axe de pivotement (34).

3. Bétonnière portée selon la revendication 1 ou 2, **caractérisée en ce que** le dispositif de fixation (30) est disposé sur un pare-boue arrière (18) de la bétonnière portée (10).

4. Bétonnière portée selon l'une quelconque des revendications précédentes, **caractérisée en ce que** le déplacement et le pivotement dudit au moins un dispositif de fixation (30) sont générés par voie électrique, pneumatique et/ou hydraulique.

5. Bétonnière portée selon l'une quelconque des revendications précédentes, **caractérisée en ce que** plusieurs dispositifs de fixation (30) maintiennent respectivement une goulotte de rallonge (20).

6. Bétonnière portée selon l'une quelconque des revendications précédentes, **caractérisée en ce que** ledit au moins un dispositif de fixation (30) s'engage sur un côté, au moyen d'une saillie (40) en forme de crochet, au-dessus de la goulotte de rallonge (20) respectivement mise en place, tandis que le côté opposé est fixé au moyen d'un mécanisme de blocage amovible manuellement.
